# EUROPEAN PATENT APPLICATION

(11) **EP 4 787 555 A1**
(43) Date of publication of application: **05.08.2026**
(21) Application number: 24869884.7
(22) Date of filing: 21.06.2024
(51) Int. Cl.: H01M 50/10, H01M 50/172, H01M 50/531, H01M 50/00, H01M 10/42, H01M 10/48

(54) **BATTERY HOUSING, BATTERY, BATTERY MODULE AND POWER DEVICE**

(30) Priority: 25.09.2023 CN 202311256388
(71) Applicant: BYD Company Limited, Shenzhen, Guangdong 518118 (CN)
(72) Inventor: WAN, Liyang, Shenzhen, Guangdong 518118 (CN); YUAN, Wansong, Shenzhen, Guangdong 518118 (CN); CHEN, Guangan, Shenzhen, Guangdong 518118 (CN); XIONG, Ming, Shenzhen, Guangdong 518118 (CN)
(74) Representative: Mathys & Squire
(86) International application number: PCT/CN2024/100767
(87) International publication number: WO 2025/066324

(57) **Abstract**

A power device is provided, including a battery module. The battery module includes a battery, and the battery includes a battery casing. The battery casing includes a casing and a first spacer, an accommodation cavity is formed in the casing, and the casing is provided with a casing implantation hole. The first spacer is disposed in the accommodation cavity, and the first spacer is provided with a spacer implantation hole. The casing implantation hole and the spacer implantation hole are used for an optical fiber to pass through.

## Description

### CROSS-REFERENCE TO RELATED APPLICATION

This application claims priority to Chinese patent application No. 202311256388.7 filed on September 25, 2023 and entitled "BATTERY CASING, BATTERY, BATTERY MODULE, AND POWER DEVICE", which is incorporated herein by reference in its entirety.

### TECHNICAL FIELD

This application relates to the field of battery technologies, and specifically, to a battery casing, a battery having the battery casing, a battery module having the battery, and a power device having the battery module.

### BACKGROUND

In related technologies, optical fibers and optical sensors are configured to monitor parameters such as a temperature and a strain of a battery. However, to fasten the optical fibers and optical sensors, an optical fiber conduit is often disposed inside the battery by some manufacturers for placement of the optical fibers and optical sensors. The addition of the optical fiber conduit may cause great damage to a structure of the battery. The optical fiber conduit occupies considerable space, which reduces volumetric energy density of the battery and may affect charge-discharge performance of the battery to some extent.

### SUMMARY

This application is intended to at least solve one of the technical problems in the prior art to some extent. In view of this, this application provides a battery casing. An optical fiber is placed by providing a casing implantation hole and a spacer implantation hole, which is wellordered and has little impact on the battery casing.

This application further provides a battery having the foregoing battery casing.

This application further provides a battery module having the foregoing battery.

This application further provides a power device having the foregoing battery module.

According to an embodiment of this application, the battery casing includes: a casing and a first spacer, wherein an accommodation cavity is formed in the casing, and the casing is provided with a casing implantation hole; and the first spacer is disposed in the accommodation cavity, and the first spacer is provided with a spacer implantation hole. The casing implantation hole and the spacer implantation hole are used for an optical fiber to pass through.

According to the battery casing in this embodiment of this application, position-limiting of the optical fiber is achieved by allowing the optical fiber to pass through the casing implantation hole and the spacer implantation hole. In addition, the optical fiber does not excessively occupy space in the accommodation cavity and has negligible impact on volumetric energy density of the battery.

According to a second embodiment of this application, the battery includes: an electrode core, an optical fiber, and the foregoing battery casing, wherein the electrode core is disposed in an accommodation cavity, and the electrode core includes an electrode core body and a first tab located at one end of the electrode core body faces a casing implantation hole; a first spacer is configured to fasten the first tab; the optical fiber passes through the casing implantation hole and the spacer implantation hole; an optical sensor is disposed on a portion of the optical fiber that is located in the accommodation cavity; the optical sensor is located in the accommodation cavity and is configured to detect the electrode core body; and a portion that is located outside the accommodation cavity and the portion of the optical fiber is configured to connect to a modulation-demodulation unit.

According to the battery in this embodiment of this application, position-limiting of the optical fiber is achieved by allowing the optical fiber to pass through the casing implantation hole and the spacer implantation hole. In addition, the optical fiber does not excessively occupy space in the accommodation cavity and has negligible impact on volumetric energy density of the battery.

According to some embodiments of this application, the optical fiber is fastened to an inner wall of the casing.

According to some embodiments of this application, the optical fiber includes: a first segment and a second segment, wherein the first segment is located on one side of the first spacer that faces the electrode core body, the optical sensor is located on the first segment, and the first segment is at least partially fastened to the inner wall of the casing; and the second segment is connected to the first segment, and the second segment is configured to connect to the modulation-demodulation unit.

According to some embodiments of this application, an orientation of the spacer implantation hole is identical to that of the casing implantation hole; or, an included angle between an orientation of the spacer implantation hole and an orientation of the casing implantation hole ranges from 70°to 110°.

According to some embodiments of this application, the battery further includes an internal structural member, wherein the internal structural member is disposed in the accommodation cavity, and a part of the optical fiber is fastened to the internal structural member.

According to some embodiments of this application, the accommodation cavity includes a first cavity wall and a second cavity wall disposed oppositely, the casing implantation hole is formed on the first cavity wall, the internal structural member includes a side plate, the side plate is fastened to one side of the electrode core body, one end of the side plate extends toward the first cavity wall, the other end of the side plate extends toward the second cavity wall, and a part of the optical fiber is fastened to the side plate.

According to some embodiments of this application, the spacer implantation hole and the side plate are located on the same side of the electrode core body, and the side plate has an inner side surface configured to be attached to the electrode core body and an outer side surface configured to fasten the optical fiber. The orientation of the spacer implantation hole is perpendicular to the outer side surface of the side plate.

According to some embodiments of this application, the battery further includes a support sleeve, and the support sleeve is disposed at the casing implantation hole. The support sleeve is provided with a support hole, and the optical fiber passes through the support hole. A fitting portion between the optical fiber and the support hole is sealed, and a fitting portion between the support sleeve and the casing implantation hole is sealed.

According to some embodiments of this application, the support sleeve includes a sleeve body and a sleeve flange, the sleeve body is inserted through the casing implantation hole, the sleeve flange is connected to the sleeve body and located in the accommodation cavity, and the sleeve flange abuts against the inner wall of the casing.

According to some embodiments of this application, the battery further includes a protective sleeve, the protective sleeve is located outside the accommodation cavity and sleeved outside the optical fiber, and the protective sleeve is inserted into the support hole.

According to some embodiments of this application, the casing includes: a casing body and an end cover, wherein the accommodation cavity that opens to the outside is formed in the casing body, the end cover is adapted to close an opening of the accommodation cavity, and the casing implantation hole is formed on the end cover.

According to some embodiments of this application, the optical sensor is configured as at least one, or a combination, of a temperature sensor, a stress sensor, a strain sensor, a potential sensor, and a barometric pressure sensor.

According to another embodiment of this application, a battery module includes the battery described above.

According to the battery module in this embodiment of this application, position-limiting of the optical fiber is achieved by allowing the optical fiber to pass through the casing implantation hole and the spacer implantation hole of the battery. In addition, the optical fiber does not excessively occupy space in the accommodation cavity and has negligible impact on volumetric energy density of the battery.

According to still another embodiment of this application, a power device includes the battery module described above.

According to the power device in this embodiment of this application, position-limiting of the optical fiber is achieved by allowing the optical fiber to pass through the casing implantation hole and the spacer implantation hole of the battery. In addition, the optical fiber does not excessively occupy space in the accommodation cavity and has negligible impact on volumetric energy density of the battery.

Additional aspects and advantages of this application will be set forth in part in the following description, and in part will become apparent from the following description, or may be learned through the practice of this application.

### BRIEF DESCRIPTION OF DRAWINGS

FIG. 1 is a partial sectional view of a battery according to an embodiment of this application;
FIG. 2 is a partial enlargement view of A in FIG. 1;
FIG. 3 is an exploded view of a battery in FIG. 1;
FIG. 4 is a diagram of mounting an optical fiber on a casing;
FIG. 5 is a diagram of a first spacer;
FIG. 6 is a cross-sectional view of B-B in FIG. 5;
FIG. 7 is a perspective view of the interior of a battery in FIG. 1;
FIG. 8 is a perspective view of a battery according to another embodiment of this application;
FIG. 9 is a partial enlargement view of C in FIG. 8;
FIG. 10 is a perspective view of a first spacer;
FIG. 11 is a partially enlarged view of portion D in FIG. 10;
FIG. 12 is a partial sectional view of the battery in FIG. 8;
FIG. 13 is a perspective view of the interior of the battery in FIG. 8;
FIG. 14 is a partial enlargement view of E in FIG. 13;
FIG. 15 is a diagram of a battery module according to an embodiment of this application; and
FIG. 16 is a diagram of a power device according to an embodiment of this application.

Reference numerals:
10000: power device; 1000: battery module; 100: battery;
1: battery casing; 10: casing; 11: casing body; 12: end cover; 121: casing implantation hole;
20: electrode core; 21: electrode core body; 22: first tab;
30: optical fiber; 31: first segment; 32: second segment; 33: optical sensor;
40: first spacer; 41: spacer implantation hole;
50: side plate;
60: support sleeve; 61: sleeve body; 62: sleeve flange; 63: support hole;
70: protective sleeve;
80: modulation-demodulation unit.

### DESCRIPTION OF EMBODIMENTS

Embodiments of this application are described in detail below, examples of which are illustrated in accompanying drawings, where same or similar reference numerals denote the same or similar elements or elements having the same or similar functions throughout. The embodiments described with reference to the accompanying drawings below are examples and intended to explain this application, and shall not be construed as limitations on this application.

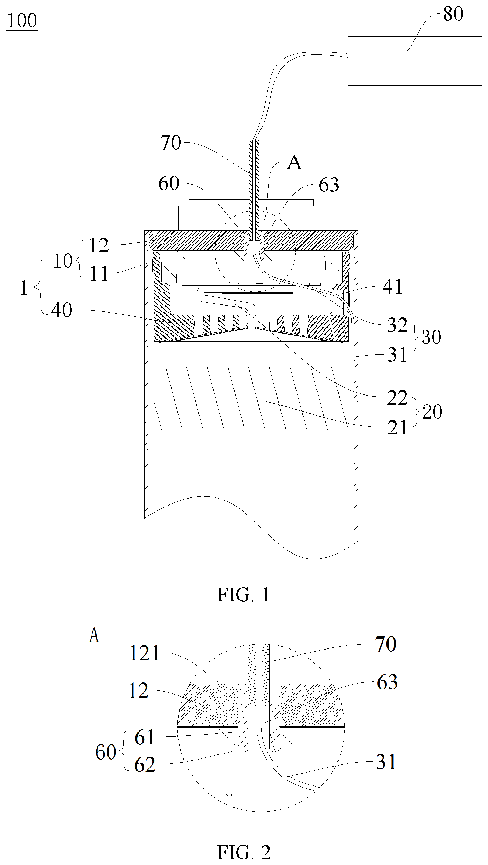

According to an embodiment of this application, a battery casing 1, a battery 100 having the battery casing 1, a battery module 1000 having the battery 100, and a power device 10000 having the battery module 1000 are described in detail below with reference to FIG. 1 to FIG. 16.

With reference to FIG. 1, FIG. 7 to FIG. 9, and FIG. 12 to FIG. 14, the battery casing 1 according to an embodiment of this application includes: a casing 10 and a first spacer 40.

An accommodation cavity is formed in the casing 10, the casing 10 is provided with a casing implantation hole 121 for an optical fiber 30 to pass through. For example, the optical fiber 30 can enter the accommodation cavity from the outside via the casing implantation hole 121.

The first spacer 40 is disposed in the accommodation cavity, and the first spacer 40 is provided with a spacer implantation hole 41 for the optical fiber 30 to pass through.

In the related technologies, when added in the battery for placement of an optical fiber and an optical sensor, an optical fiber conduit may cause great damage to a structure of the battery, which occupies considerable space, reduces volumetric energy density of the battery, and may affect charge-discharge performance of the battery to some extent. In the battery casing 1 according to the embodiment of this application, position-limiting of the optical fiber 30 is achieved by allowing the optical fiber 30 to pass through the casing implantation hole 121 and the spacer implantation hole 41, and there is no need to add the optical fiber conduit in the battery. In addition, the optical fiber 30 does not excessively occupy space in the accommodation cavity and has negligible impact on volumetric energy density of the battery 100.

With reference to FIG. 1, FIG. 7 to FIG. 9, and FIG. 12 to FIG. 14, a battery 100 according to an embodiment of this application may include: a casing 10, an electrode core 20, a first spacer 40, and an optical fiber 30.

The electrode core 20 is disposed in an accommodation cavity. The electrode core 20 includes an electrode core body 21 and a first tab 22, where the first tab 22 is located at one end of the electrode core body 21 that faces a casing implantation hole 121. The first spacer 40 is fastened within the accommodation cavity and is configured to fasten the first tab 22.

The optical fiber 30 passes through the casing implantation hole 121 and a spacer implantation hole 41, thereby limiting a position of the optical fiber 30. An optical sensor 33 is disposed on a portion of the optical fiber 30 that is located in the accommodation cavity. The optical sensor 33 is located in the accommodation cavity and is configured to detect the electrode core body 21. Optionally, the optical sensor 33 is in contact with a surface of the electrode core body 21, so that the optical sensor 33 can collect parameter information of the electrode core body 21. A portion of the optical fiber 30 that is located outside the accommodation cavity is configured to connect to a modulation-demodulation unit 80. Specifically, one end that is located outside the accommodation cavity and that is of the optical fiber 30 is formed as a modulation-demodulation connecting end, and the modulation-demodulation connecting end is configured to connect to the modulation-demodulation unit 80. The optical fiber 30 is configured to transmit probe light to the optical sensor 33. After the optical sensor 33 collects the parameter information of the electrode core body 21, the optical fiber 30 transmits signal light including to-be-measured parameter information back to the modulation-demodulation unit 80.

Specifically, the optical sensor 33 on the optical fiber 30 is adapted to detect parameters of the electrode core 20, including but not limited to, parameters such as a temperature, a strain, a stress, a gas, a gas pressure, and positive and negative electrode potentials. The battery 100 provided with the optical fiber 30 can provide state parameters of a single electrode core 20, enabling a battery management system (BMS) to perform more accurate, timely, and comprehensive state monitoring of the battery 100, and to provide an early warning based on parameters characterizing abnormal states of the battery 100. More specifically, the casing 10 may be a rigid casing, a flexible casing, or the like, which is not limited here.

Optionally, there may be one or more optical sensors 33 disposed on one optical fiber 30, and the optical sensors 33 can be disposed at any position or a specific position inside the battery 100 by adjusting a length and curvature of the optical fiber 30. Multiple optical sensors 33 placed in the accommodation cavity can be integrated onto one optical fiber 30, thereby simplifying a structure of the battery 100 and reducing manufacturing costs. Adjusting the number of the optical sensors 33 and the arrangement of the optical fiber 30 can achieve collection of temperatures, strains, and other signals at different positions of the battery 100, offering high flexibility.

In some embodiments, the optical fiber 30 may be coated with a material such as polyimide (PI) or polytetrafluoroethylene (PTFE), thereby protecting the optical fiber 30 from electrolyte corrosion.

In some embodiments, a bending radius of the optical fiber 30 needs to satisfy a specific requirement. For example, the bending radius of the optical fiber 30 should be greater than 5 mm, thereby preventing the optical fiber 30 from being easily broken when the bending radius is too small.

The electrode core body 21 includes a first electrode sheet, a second electrode sheet, and a separator disposed between the first electrode sheet and the second electrode sheet. Specifically, the electrode core body 21 is formed by winding or stacking the first electrode sheet, the separator, and the second electrode sheet. The first electrode sheet is one of a positive electrode sheet and a negative electrode sheet, and the second electrode sheet is the other of the positive electrode sheet and the negative electrode sheet.

In this application, the terms "first" and "second" are used for descriptive purposes only and will not be construed as indicating or implying relative importance or implicitly specifying the number of technical features indicated.

According to the battery 100 in this embodiment of this application, position-limiting of the optical fiber 30 is achieved by allowing the optical fiber 30 to pass through the casing implantation hole 121 and the spacer implantation hole 41, and there is no need to add an optical fiber conduit in the battery. In addition, the optical fiber 30 does not excessively occupy space in the accommodation cavity and has negligible impact on volumetric energy density of the battery 100.

According to the embodiment of this application, the battery 100 may include an internal structural member, and the internal structural member is disposed in the accommodation cavity. Optionally, the internal structural member may be connected to the casing 10 to implement mounting and fastening of the internal structural member in the accommodation cavity. Optionally, the internal structural member may be connected to other structures in the accommodation cavity to implement mounting and fastening of the internal structural member in the accommodation cavity.

The optical fiber 30 is fastened to the inner wall and/or internal structural member of the casing 10. Specifically, the optical fiber 30 may be fastened solely to the inner wall of the casing 10 or solely to the internal structural member. Alternatively, the optical fiber 30 may also be fastened partially to the inner wall of the casing 10 and partially to the internal structural member.

The internal structural member is a structural member other than the electrode core 20 and the casing 10. For example, optionally, the internal structural member may be a bracket or a side plate 50, and the side plate 50 is fastened to one side of the electrode core body 21. Certainly, the internal structural member may also be another structural member.

In the related technologies, the optical sensor is fastened to a surface of a negative electrode inside the electrode core with an adhesive. However, the adhesive may cause a degree of damage to an active material on the negative electrode sheet, affecting electrical performance of the battery. In the battery 100 according to the embodiment of this application, the optical fiber 30 is fastened to the inner wall and/or internal structural member of the casing 10, so that implantation of the optical fiber 30 and the optical sensor 33, as well as collection and transmission of corresponding parameter signals, can be completed without damaging an internal structure of the battery 100 and the electrode core body 21. This achieves non-destructive implantation of the optical fiber 30 and the optical sensor 33 in the battery 100, and reduces the influence on the electrode core 20 during mounting of the optical fiber 30. In addition, the optical fiber 30 does not excessively occupy space in the accommodation cavity and thus has negligible impact on volumetric energy density of the battery 100.

In some embodiments of this application, the optical fiber 30 is fastened to the inner wall of the casing 10. With reference to FIG. 1 and FIG. 2, the optical fiber 30 may include: a first segment 31 and a second segment 32. The first segment 31 is located on one side of the first spacer 40 that faces the electrode core body 21. The optical sensor 33 is located on the first segment 31, and the first segment 31 is at least partially fastened to the inner wall of the casing 10. The second segment 32 is connected to the first segment 31. The second segment 32 is configured to connect to the modulation-demodulation unit 80. In other words, the modulation-demodulation connecting end is located on the second segment 32, and the second segment 32 is inserted through the casing implantation hole 121 and the spacer implantation hole 41. As shown in FIG. 1, the first segment 31 is located at a lower side of the first spacer 40, the optical sensor 33 is located at a lower end of the first segment 31, the second segment 32 is inserted through the casing implantation hole 121 and the spacer implantation hole 41, and the modulation-demodulation connecting end is located at an upper end of the second segment 32. In the battery 100 according to the embodiment of this application, as the optical fiber 30 and the optical sensor 33 are disposed on the inner wall of the casing 10, non-destructive implantation of the optical fiber 30 and the optical sensor 33 in the battery 100 can be achieved, and the influence of the optical fiber 30 and the optical sensor 33 on the electrode core 20 and the structure of the battery 100 is avoided as much as possible. As the optical fiber 30 and the optical sensor 33 are not in direct contact with the active material of the battery 100, the influence on charge-discharge performance of the battery 100 is substantially negligible. In addition, the optical fiber 30 is disposed on the inner wall of the casing 10 to play a role in protecting the optical fiber 30, which greatly reduces a risk of signal distortion caused by damage to the optical fiber 30 during fabrication and use of the battery 100.

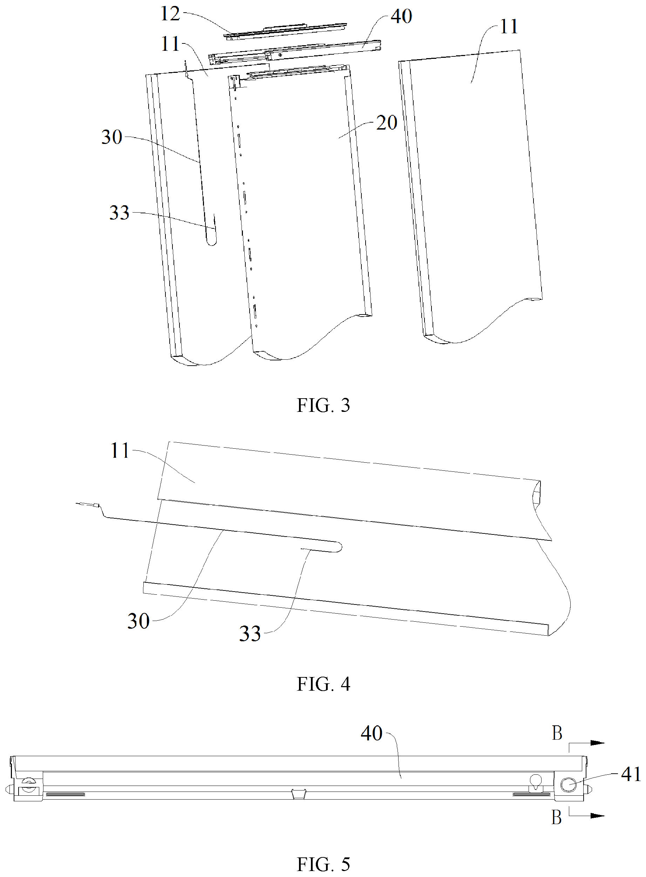

During fabrication of the battery 100, the optical fiber 30 can be adhered to a surface of an unformed casing body 11. A material for the unformed casing body 11 undergoes roll-bending, high-frequency welding, shaping, cutting, and other procedures to finally form the casing body 11 with an inner wall surface on which the optical fiber 30 and the optical sensor 33 are disposed, as shown in FIG. 4.

In some embodiments of this application, the spacer implantation hole 41 has the same orientation as the casing implantation hole 121. For example, both the spacer implantation hole 41 and the casing implantation hole 121 are opened upward, which makes it easy for an operator to insert the optical fiber 30 through the top of the battery 100.

In some embodiments of this application, an orientation of the spacer implantation hole 41 is different from that of the casing implantation hole 121. For example, an included angle between the orientation of the spacer implantation hole 41 and the orientation of the casing implantation hole 121 ranges from 70° to 110°. Optionally, the included angle between the orientation of the spacer implantation hole 41 and the orientation of the casing implantation hole 121 may be 70°, 80°, 90°, 100°, 110°, and the like. Certainly, the included angle between the orientation of the spacer implantation hole 41 and the orientation of the casing implantation hole 121 may also be other values between 70° and 110°, which are not listed here one by one.

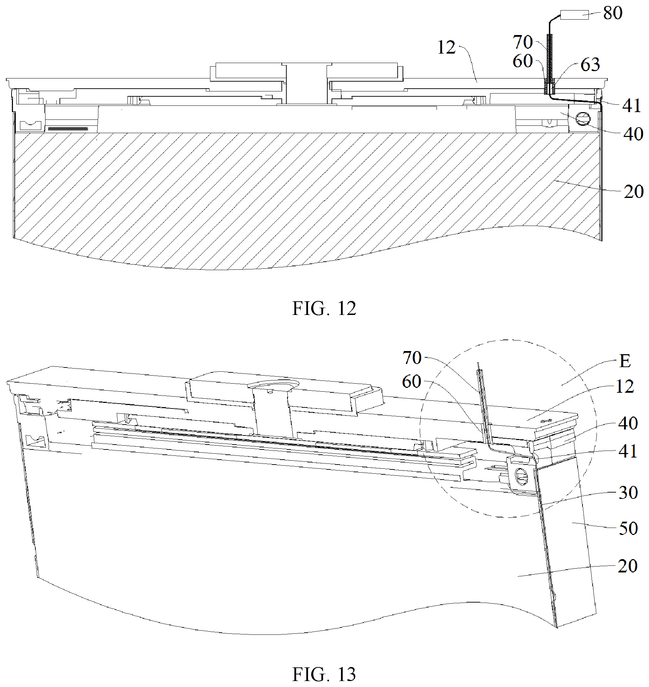

In some embodiments of this application, the optical fiber 30 is fastened to the internal structural member. With reference to FIG. 12 to FIG. 14, the casing 10 includes a first cavity wall and a second cavity wall disposed oppositely. The casing implantation hole 121 is formed on the first cavity wall. The internal structural member includes a side plate 50, and the side plate 50 is fastened to one side of the electrode core body 21. One end of the side plate 50 extends toward the first cavity wall, and the other end of the side plate 50 extends toward the second cavity wall. A part of the optical fiber 30 is fastened to the side plate 50. For example, the first cavity wall is a top wall, the second cavity wall is a bottom wall, the side plate 50 is disposed in a vertical direction, the first spacer is located between an upper end of the side plate 50 and the top wall of the accommodation cavity, and the optical fiber 30 is fastened to the side plate 50 after passing through the casing implantation hole 121 and the spacer implantation hole 41. In the battery 100 according to the embodiment of this application, as the optical fiber 30 and the optical sensor 33 are disposed on the side plate 50, non-destructive implantation of the optical fiber 30 and the optical sensor 33 in the battery 100 can be achieved, and the influence of the optical fiber 30 and the optical sensor 33 on the electrode core 20 and the structure of the battery 100 is avoided as much as possible. As the optical fiber 30 and the optical sensor 33 are not in direct contact with the active material of the battery 100, the influence on charge-discharge performance of the battery 100 is substantially negligible. In addition, the optical fiber 30 is disposed on the side plate 50 to play a role in protecting the optical fiber 30, which greatly reduces risk of signal distortion caused by damage to the optical fiber 30 during fabrication and use of the battery 100.

In some embodiments of this application, as shown in FIG. 12 to FIG. 14, the spacer implantation hole 41 and the side plate 50 are located on the same side of the electrode core body 21. The side plate 50 has an inner side surface and an outer side surface. The inner side surface of the side plate is configured to be attached to the electrode core body 21, and the outer side surface of the side plate is configured to fasten the optical fiber 30. The orientation of the spacer implantation hole 41 is perpendicular to the outer side surface of the side plate. In this case, the optical fiber 30, after passing through the casing implantation hole 121 from top to bottom, can pass through the spacer implantation hole 41 in a horizontal direction and then be attached to the side plate 50 in the vertical direction, which facilitates routing of the optical fiber 30.

In some embodiments of this application, with reference to FIG. 1 and FIG. 2, FIG. 7 to FIG. 9, and FIG. 12 to FIG. 14, the battery 100 may further include a support sleeve 60, and the support sleeve 60 is disposed at the casing implantation hole 121. The support sleeve 60 is provided with a support hole 63, the optical fiber 30 passes through the support hole 63, and a fitting portion between the optical fiber 30 and the support hole 63 is sealed. The support sleeve 60 can support the optical fiber 30, and a fitting portion between the support sleeve 60 and the casing implantation hole 121 is sealed. Optionally, the fitting portion between the optical fiber 30 and the support hole 63 can be sealed with an epoxy adhesive, and the support sleeve 60 can be welded or adhered into the casing implantation hole 121.

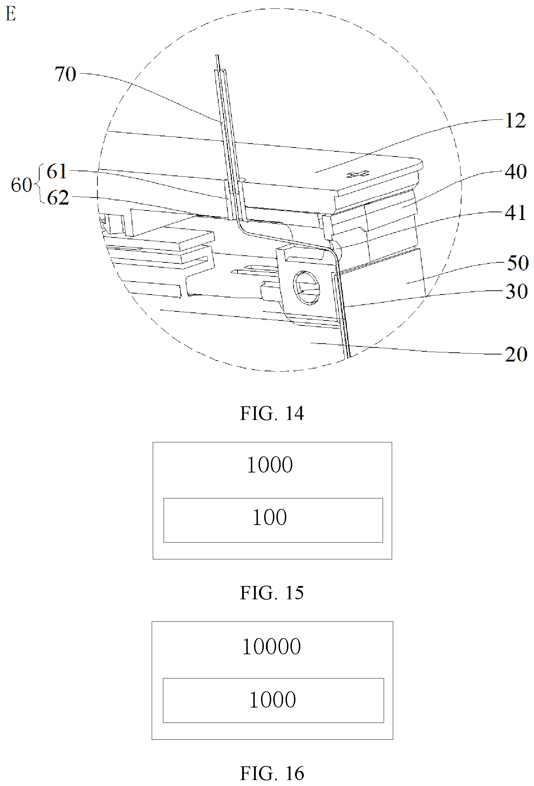

In some embodiments of this application, with reference to FIG. 2 and FIG. 14, the support sleeve 60 may include a sleeve body 61 and a sleeve flange 62. The sleeve body 61 is inserted through the casing implantation hole 121, the sleeve flange 62 is connected to the sleeve body 61, and the sleeve flange 62 is located in the accommodation cavity and abuts against the inner wall of the casing 10, so that a position of the support sleeve 60 in the casing implantation hole 121 is accurate to ensure that an overlap length between the sleeve body 61 and the casing implantation hole 121 in an axial direction is longer. This helps reduce risk that the support sleeve 60 falls off the casing implantation hole 121 and improves reliability of the support sleeve 60 in supporting the optical fiber 30. Optionally, a joint between the sleeve flange 62 and the inner wall of the casing 10 can be sealed and fastened by spot welding, with a simple process. In other words, an effective diameter of the sleeve flange 62 is greater than that of the casing implantation hole 121. The "effective diameter of the sleeve flange 62" refers to a distance between two farthest points of the sleeve flange 62 on the same cross-section of the sleeve flange 62. For example, when the cross-section of the sleeve flange 62 is circular, the effective diameter of the sleeve flange 62 is a diameter of the circle. Similarly, the "effective diameter of the casing implantation hole 121" refers to a distance between two farthest points of the casing implantation hole 121 on the same cross-section. For example, when the casing implantation hole 121 is a circular hole, the effective diameter of the casing implantation hole 121 is a diameter of the circular hole.

In some embodiments of this application, the battery 100 further includes a protective sleeve 70, and the protective sleeve 70 is located outside the accommodation cavity, and the protective sleeve 70 is sleeved outside the optical fiber 30 to provide protection for the optical fiber 30. The protective sleeve 70 is inserted into the support hole 63, so that the protective sleeve 70 is retained in position and cannot fall off. Optionally, the protective sleeve 70 may be a rubber tube, a silicone tube, a plastic tube, a metal tube, and the like.

In some embodiments of this application, the casing 10 may include a casing body 11 and an end cover 12. An accommodation cavity that opens to the outside is formed in the casing body 11, the end cover 12 is adapted to close an opening of the accommodation cavity, and the casing implantation hole 121 is formed on the end cover 12. Optionally, the casing body 11 is a barrel-shaped structure with one end open, and the end cover 12 is configured to close the open end of the casing body 11. Alternatively, the casing body 11 is a cylindrical structure with both ends open, and both open ends of the casing body 11 are provided with end covers 12.

Optionally, the casing body 11 can be an aluminum casing or a steel casing.

In an embodiment shown in FIG. 1, a part of the optical fiber 30 is fastened to the inner wall of the casing body 11. During assembling of the battery 100, after the optical fiber 30 and the optical sensor 33 are disposed, an adhesive is applied to the optical fiber 30 and the casing body 11 to fasten the optical fiber 30, and then the end cover 12 and the casing body 11 are sealed by welding.

According to some embodiments of this application, the optical sensor 33 is configured as at least one, or a combination, of a temperature sensor, a stress sensor, a strain sensor, a potential sensor, and a barometric pressure sensor. It will be understood that types of the optical sensor 33 include, but are not limited to, a temperature sensor, a strain sensor, a stress sensor, a gas sensor, a barometric pressure sensor, a potential sensor, and the like. A measurement range and accuracy of each sensor are matched to an operating range of the battery 100. A plurality of sensors of the same type may be used in the same battery 100 and disposed at different positions. For example, the temperature sensors may be arranged at the top, middle, and bottom of the electrode core body 21. Different types of sensors may be used alone in one battery 100, or integrated and used in combination. For example, the temperature sensor and the stress sensor are disposed at the middle of the same electrode core body 21, and the gas sensor and the barometric pressure sensor are arranged at a top end of the electrode core body 21. These configurations can be adjusted according to actual requirements.

In some embodiments, the optical sensor 33 is a fiber Bragg grating sensor, namely, an FBG (Fiber Bragg Grating) sensor. The FBG sensor can change a wavelength of a reflected light wave according to changes in an environmental temperature and strain, and can be configured to detect temperature and strain parameters of the electrode core body 21. Specifically, the FBG sensor includes a temperature sensor and a strain sensor. Based on the principle of fiber Bragg grating, the temperature sensor can detect a temperature signal at a specific position in the battery 100, and the strain sensor can detect a strain signal at a specific position in the battery 100. In the battery 100 according to the embodiment of this application, the FBG sensor can be configured to monitor temperatures, strains, and other signals in the battery 100 in real time, with high measurement accuracy. A failure status of the battery 100 can be warned in advance based on an internal real-time signal, thereby improving safety of the battery 100. In some embodiments of this application, the FBG sensor has a thickness of less than 5 mm, where the temperature sensor has a detectable temperature range of -40°C to +150°C with a temperature measurement accuracy of ±1°C. The strain sensor has a detectable pressure range of 0 kN to 70 kN with a pressure accuracy of 5% F.S..

In some embodiments of this application, the electrode core 20 may further include a second tab, and the second tab is located at one end of the electrode core body 21 that is away from the first tab 22. That is, the second tab is located at one end of the electrode core body 21 that is far from the casing implantation hole 121. The battery 100 may further include a second spacer, and the second spacer is fastened to the second tab. The first tab 22 is one of a positive electrode tab and a negative electrode tab, and the second tab is the other of the positive electrode tab and the negative electrode tab.

Optionally, the first tab 22 is the positive electrode tab, and the second tab is the negative electrode tab. An explosion-proof valve is disposed at the negative electrode tab. The casing implantation hole 121 and the spacer implantation hole 41 are formed close to the positive electrode tab, so that the optical fiber 30 can be kept away from the explosion-proof valve. When the battery 100 undergoes thermal runaway, a high-temperature spray from the explosion-proof valve may cause less damage to the optical fiber 30.

An assembly sequence of the battery 100 according to the embodiment of this application may be as follows.
(1) Feed the electrode core body 21.
(2) Apply tab root glue to both ends of the electrode core body 21, adhere the first tab 22 to one end of the electrode core body 21, and adhere the second tab to the other end of the electrode core body 21.
(3) Attach the electrode core body 21 to the side plate 50.
(4) Snap-fit the first spacer 40 onto the first tab 22.
(5) Cut the first tab 22 and the second tab.
(6) Snap-fit the second spacer onto the second tab.
(7) Coat the electrode core 20 with an insulating film, and thermally fuse the insulating film. It will be noted that the insulating film at an end where the first tab 22 is thermally fused to a position below the spacer implantation hole 41 of the first spacer 40.
(8) Insert the foregoing film-coated electrode core 20 into the casing body 11 integrated with the optical fiber 30 and the optical sensor 33, enable the optical fiber 30 to pass through the casing implantation hole 121 and the spacer implantation hole 41, and perform axial position limitation on the end cover 12 by the sleeve flange 62 of the support sleeve 60.
(9) Weld and fasten the end cover 12 to the casing body 11.

A battery 100 according to an embodiment of this application is described below with reference to FIG. 1 to FIG. 7.

The battery 100 includes a casing body 11, an end cover 12, a first spacer 40, a second spacer, a side plate 50, an electrode core 20, an optical sensor 33, and an optical fiber 30. The casing body 11 is provided with one or two openings. The end cover 12 is configured to seal the opening, and the end cover 12 is provided with a casing implantation hole 121 for the optical fiber 30 to pass through. The first spacer 40 is fastened to a first tab by snap-fitting and thermal fusion, and the second spacer is fastened to the second tab by snap-fitting and thermal fusion. A side surface of the first spacer 40 is provided with a spacer implantation hole 41 for the optical fiber 30 to pass through. The electrode core 20 includes an electrode core body 21, a first tab, and a second tab. The electrode core body 21 includes a positive electrode sheet, a negative electrode sheet, and a separator. The electrode core 20 is encapsulated in the casing body 11. The optical sensor 33 is integrated to one side of the optical fiber 30 that is located in an accommodation cavity, is fastened to an inner wall of the casing body 11 along with the optical fiber 30, and is in contact with a front surface of the electrode core body 21. The optical fiber 30 is disposed on the inner wall of the casing body 11, and is connected to an external modulation-demodulation unit 80 after passing through the spacer implantation hole 41 of the first spacer 40 and the casing implantation hole 121 of the end cover 12.

This application provides a casing body 11 according to an embodiment. The casing body 11 may be a steel casing or an aluminum casing. An optical fiber 30 and an optical sensor 33 are fastened to an inner wall. The optical fiber 30 is adhered to a surface of an unformed outer casing. A material for the unformed casing undergoes roll-bending, high-frequency welding, shaping, cutting, and other procedures to finally form the casing body with an inner wall surface on which the optical fiber 30 and the optical sensor 33 are disposed, as shown in FIG. 4.

This application provides an embodiment of a first spacer 40. The first spacer 40 is provided with a hole at a position shown in FIG. 1, FIG. 5 and FIG. 6. This hole serves as the spacer implantation hole 41. One end of the optical fiber 30 passes through the spacer implantation hole 41, and the optical fiber 30 extends through a sealed space between the first spacer 40 and the end cover 12.

This application provides an embodiment of an end cover 12. The end cover 12 is provided with a hole at a position shown in FIG. 1. This hole serves as the casing implantation hole 121. The optical fiber 30 passes through the casing implantation hole 121 and is connected to the external modulation-demodulation unit 80. The support sleeve 60 is fastened to an inner side of the casing implantation hole 121 due to a limiting effect, thereby playing a role in fastening the optical fiber 30.

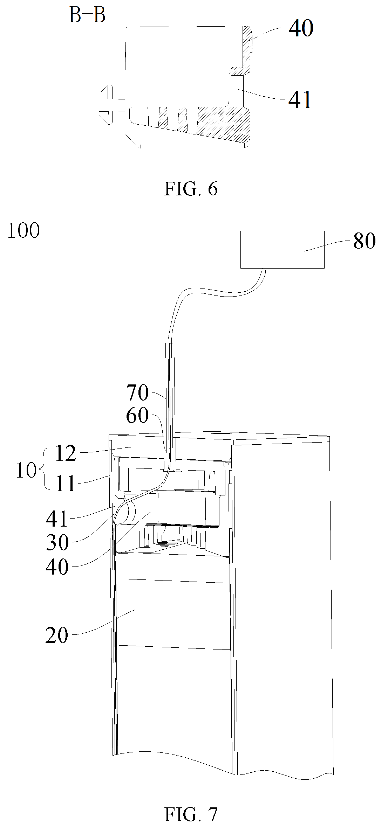

In a specific implementation, one end of the optical fiber 30 that is provided with the support sleeve 60 passes through the spacer implantation hole 41. After the end cover 12 is welded to the casing body 11, the optical fiber 30 passes through the casing implantation hole 121 and is connected to the external modulation-demodulation unit 80, as shown in FIG. 1. No other battery components are present in a region of the casing 10 through which the optical fiber 30 passes, and the optical fiber 30 is in a slightly curve and suspended state therein, as shown in FIG. 7.

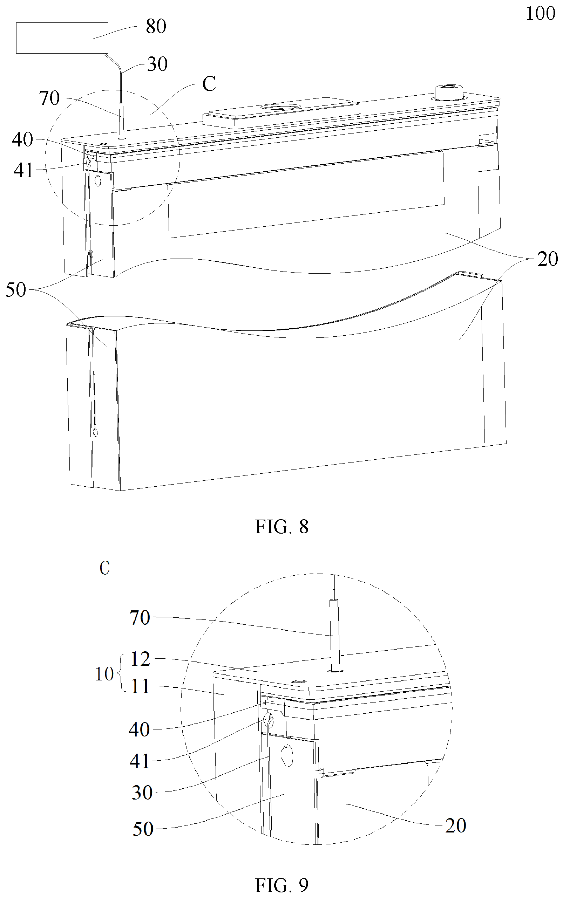

A battery 100 according to another embodiment of this application is described below with reference to FIG. 8 to FIG. 14.

As shown in FIG. 8 and FIG. 9, the battery 100 includes a casing body 11, an end cover 12, a first spacer 40, a second spacer, a side plate 50, an electrode core 20, an optical sensor 33, and an optical fiber 30. The casing body 11 is provided with one or two openings. The end cover 12 is configured to seal the opening, and the end cover 12 is provided with a casing implantation hole 121 for the optical fiber 30 to pass through. The first spacer 40 is fastened to a first tab by snap-fitting and thermal fusion, and the second spacer is fastened to the second tab by snap-fitting and thermal fusion. A side surface of the first spacer 40 is provided with a spacer implantation hole 41 for the optical fiber 30 to pass through. The electrode core 20 includes an electrode core body 21, a first tab, and a second tab. The electrode core body 21 includes a positive electrode sheet, a negative electrode sheet, and a separator. The electrode core 20 is encapsulated in the casing body 11. The optical sensor 33 is integrated to one side of the optical fiber 30 that is located in an accommodation cavity, is fastened to the side plate 50 along with the optical fiber 30, and is in contact with a side surface of the electrode core body 21. The optical fiber 30 is disposed on the side plate 50, and is connected to an external modulation-demodulation unit 80 after passing through the spacer implantation hole 41 of the first spacer 40 and the casing implantation hole 121 of the end cover 12.

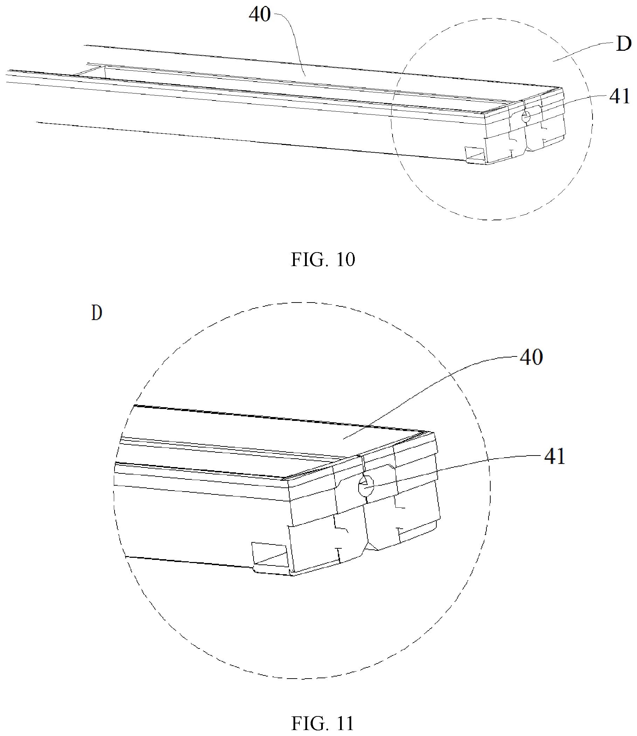

This application provides another embodiment of the first spacer 40, the first spacer 40 is provided with a hole at a position shown in FIG. 10 and FIG. 11. This hole serves as the spacer implantation hole 41. One end of the optical fiber 30 fastened to the side plate 50 passes through the spacer implantation hole 41 and reaches a sealed space between the first spacer 40 and the end cover 12.

In a specific implementation, one end of the optical fiber 30 that is provided with the support sleeve 60 passes through the spacer implantation hole 41. After the end cover 12 is welded to the casing body 11, the optical fiber 30 passes through the casing implantation hole 121 and is connected to the external modulation-demodulation unit 80, as shown in FIG. 12. No other battery components are present in a region of the end cover 12 through which the optical fiber 30 passes, and the optical fiber 30 is in a slightly curve and suspended state therein, as shown in FIG. 13 and FIG. 14.

In the battery 100 according to the embodiment of this application, the optical fiber 30 and the optical sensor 33 are integrated onto the inner wall of the casing body 11 or the side plate 50, the optical fiber 30 is implanted into the battery 100 through the casing implantation hole 121 and the spacer implantation hole 41. The optical sensor 33 includes a temperature sensor and a strain sensor, which can collect internal temperature and strain data signals of the battery 100 simultaneously. A plurality of optical sensors 33 may be disposed on one implantation optical fiber 30, and after the signals obtained by the optical sensors 33 are output to the modulation-demodulation unit 80 through the optical fiber 30, intelligent monitoring of the battery 100 is completed.

With reference to FIG. 15, a battery module 1000 according to another embodiment of this application includes the battery 100 provided in the foregoing embodiment.

In the battery module 1000 according to the embodiment of this application, position-limiting of the optical fiber 30 is achieved by allowing the optical fiber 30 to pass through the casing implantation hole 121 and the spacer implantation hole 41 of the battery 100, and there is no need to add an optical fiber conduit inside the battery. In addition, the optical fiber 30 does not excessively occupy space in the accommodation cavity and has negligible impact on volumetric energy density of the battery 100.

With reference to FIG. 16, a power device 10000 according to still another embodiment of this application includes the battery module 1000 provided in the foregoing embodiment.

In the power device 10000 according to the embodiment of this application, position-limiting of an optical fiber 30 is achieved by allowing the optical fiber 30 to pass through a casing implantation hole 121 and a spacer implantation hole 41 of a battery 100, and there is no need to add an optical fiber conduit inside the battery. In addition, the optical fiber 30 does not excessively occupy space in the accommodation cavity and has negligible impact on volumetric energy density of the battery 100.

Optionally, the power device 10000 may be a vehicle, a machine tool, a household appliance, and the like.

In the description of the present disclosure, it will be understood that an orientation or positional relationship indicated by terms "longitudinal", "transverse", "length", "width", "thickness", "upper", "lower", "front", "back", "left", "right", "vertical", "horizontal", "top", "bottom", "inside", and "outside" is based on the orientation or positional relationship shown in the drawings only for convenience of description of the present invention and simplification of description rather than indicating or implying that the device or element referred to must have a particular orientation, be constructed and operate in a particular orientation, and thus are not to be construed as limiting the present disclosure.

In this application, unless otherwise specified and limited, the terms "mount", "connected", "connect", "fasten" and the like will be understood in a broad sense. For example, the terms may indicate a fixed connection, a detachable connection, or an integrated connection; may indicate a mechanical connection, an electrical connection, or mutual communication; or may indicate a direct connection, an indirect connection through an intermediate medium, an internal communication between two elements, or an interaction relationship between two elements. For those of ordinary skill in the art, the specific meanings of the foregoing terms in this application will be understood on a case-by-case basis.

In the descriptions of this specification, descriptions referring to the terms "one embodiment", "some embodiments", "examples", "specific example" or "some examples" mean that specific features, structures, materials or characteristics described in connection with this embodiment or example are included in at least one embodiment or example of this application. In this specification, the illustrative expression of the foregoing terms do not necessarily refer to the same embodiment or example. Moreover, the specific features, structures, materials or characteristics described may be combined in any one or more embodiments or examples in a suitable manner. Moreover, a person skilled in the art may join and combine different embodiments or examples described in this specification.

Although embodiments of this application have already shown and described in the foregoing, it will be understood that the foregoing embodiments are exemplary and will not be construed as a limitation on this application. A person of ordinary skill in the art may make changes, modifications, substitutions, and alternations to the foregoing embodiments within the scope of this application.

## Claims

1. A battery casing (1), comprising:
a casing (10), an accommodation cavity being formed in the casing (10), and the casing (10) being provided with a casing implantation hole (121); and
a first spacer (40), the first spacer (40) being disposed in the accommodation cavity, the first spacer (40) being provided with a spacer implantation hole (41), and the casing implantation hole (121) and the spacer implantation hole (41) being used for an optical fiber (30) to pass through.

2. A battery (100), comprising:
the battery casing (1) according to claim 1;
an electrode core (20), the electrode core (20) being disposed in an accommodation cavity, the electrode core (20) comprising an electrode core body (21) and a first tab (22) located at one end of the electrode core body (21) that faces a casing implantation hole (121), and a first spacer (40) being configured to fasten the first electrode tab (22); and
an optical fiber (30), the optical fiber (30) passing through the casing implantation hole (121) and the spacer implantation hole (41), an optical sensor (33) being disposed on a portion of the optical fiber (30) that is located in the accommodation cavity, the optical sensor (33) being located in the accommodation cavity and configured to detect the electrode core body (21), and a portion of the optical fiber (30) being located outside the accommodation cavity and the portion of the optical fiber (30) being configured to connect to a modulation-demodulation unit (80).

3. The battery (100) according to claim 2, wherein the optical fiber (30) is fastened to an inner wall of the casing (10).

4. The battery (100) according to claim 3, wherein the optical fiber (30) comprises:
a first segment (31), the first segment (31) being located on one side of the first spacer (40) that faces the electrode core body (21), the optical sensor (33) being located on the first segment (31), and the first segment (31) being at least partially fastened to the inner wall of the casing (10); and
a second segment (32), the second segment (32) being connected to the first segment (31) and the second segment (32) being configured to connect to the modulation-demodulation unit (80).

5. The battery (100) according to claim 3 or 4, wherein an orientation of the spacer implantation hole (41) is the same as that of the casing implantation hole (121); or an included angle between an orientation of the spacer implantation hole (41) and an orientation of the casing implantation hole (121) ranges from 70° to 110°.

6. The battery (100) according to any one of claims 2 to 5, wherein the battery (100) further comprises an internal structural member, the internal structural member is disposed in the accommodation cavity, and a part of the optical fiber (30) is fastened to the internal structural member.

7. The battery (100) according to claim 6, wherein the casing (10) comprises a first cavity wall and a second cavity wall disposed oppositely, the casing implantation hole (121) is formed on the first cavity wall, the internal structural member comprises a side plate (50), the side plate (50) is fastened to one side of the electrode core body (21), one end of the side plate (50) extends toward the first cavity wall, the other end of the side plate (50) extends toward the second cavity wall, and a part of the optical fiber (30) is fastened to the side plate (50).

8. The battery (100) according to claim 7, wherein the spacer implantation hole (41) and the side plate (50) are located on a same side of the electrode core body (21), and the side plate (50) has an inner side surface configured to be attached to the electrode core body (21) and an outer side surface configured to fasten the optical fiber (30); and the orientation of the spacer implantation hole (41) is perpendicular to the outer side surface of the side plate.

9. The battery (100) according to any one of claims 2 to 8, wherein the battery (100) further comprises a support sleeve (60), the support sleeve (60) is disposed at the casing implantation hole (121), the support sleeve (60) is provided with a support hole (63), the optical fiber (30) passes through the support hole (63), a fitting portion of the optical fiber (30) and the support hole (63) is sealed, and a fitting portion of the support sleeve (60) and the casing implantation hole (121) is sealed.

10. The battery (100) according to claim 9, wherein the support sleeve (60) comprises a sleeve body (61) and a sleeve flange (62), the sleeve body (61) is inserted through the casing implantation hole (121), the sleeve flange (62) is connected to the sleeve body (61) and located in the accommodation cavity, and the sleeve flange (62) abuts against the inner wall of the casing (10).

11. The battery (100) according to claim 9 or 10, wherein the battery (100) further comprises a protective sleeve (70), the protective sleeve (70) is located outside the accommodation cavity and sleeved outside the optical fiber (30), and the protective sleeve (70) is inserted into the support hole (63).

12. The battery (100) according to any one of claims 2 to 11, wherein the casing (10) comprises:
a casing body (11), an accommodation cavity that opens to the outside being formed in the casing body (11); and
an end cover (12), the end cover (12) being adapted to close an opening of the accommodation cavity, and the casing implantation hole (121) being formed on the end cover (12).

13. The battery (100) according to any one of claims 2 to 12, wherein the optical sensor (33) is configured as at least one or a combination of a temperature sensor, a stress sensor, a strain sensor, a potential sensor, and a barometric pressure sensor.

14. A battery module (1000), comprising the battery (100) according to any one of claims 2 to 13.

15. A power device (10000), comprising the battery module (1000) according to claim 14.
